# EUROPEAN PATENT APPLICATION

(11) **EP 0 611 908 A1**
(43) Date of publication of application: **24.08.1994**
(21) Application number: 94200245.2
(22) Date of filing: 09.02.1994
(51) Int. Cl.: F16K 41/10, F16K 7/16

(54) **Improved control member for diaphragm valve, in particular for steam valves**

(30) Priority: 15.02.1993 IT MI930126 U
(71) Applicant: FEDEGARI AUTOCLAVI SPA, I-27010 Albuzzano (PV) (IT)
(72) Inventor: Fedegari, Fortunato, I-27100 Pavia (IT)
(74) Representative: Michelotti, Giuliano

(57) **Abstract**

Improved control member for valves comprising a valve body (112) formed by a base (114), provided with an inlet duct (116) terminating in a bevelled rim (154) acting as a sealing seat in the form of a lateral surface of a truncated cone, emerging in a shallow seat (148), and with an outlet duct (118) connected to the shallow seat (148) into which the sealing seat (154) comes out, and by a cover (120) facing the base (114) and gripping between its internal cavity (122) and the shallow seat (148) a mobile closing member (132) comprising a solid central plug (136) engageable with the sealing seat (154), a flexible thinner radial zone (142) connecting the central plug (136) to a raised peripheral zone (140) which can be gripped, with the interposition of elastic means (152), between the internal cavity (122) of the cover (120) and the shallow seat (148) of the base (114). The mobile member (132) may be operated either manually by a handle such as those typical of a tap or by a motor-driven actuator such as a pneumatic or hydraulic cylinder, making it also possible to achieve a control means of the proportional kind.

## Description

The present invention relates to an improved control system with mobile members for valves which can be used in particular both for interrupting and controlling the flow of steam utilizable in manually operated taps as well as in valves operated automatically by means of known actuators of the mechanical, electrical, hydraulic or pneumatic kind which avoids phenomena of wear and/or breakage of membranes forming part of said mobile members and allows both simple opening and closing of served devices and proportional control of the flows through said devices.

For some time now valves for interrupting and, where necessary, controlling the flow of industrial fluids, such as compressed air, operating liquids and steam, have been known. A very common kind of such valve is the so-called membrane valve containing as a mobile member a membrane of flexible and elastic material which, under the thrust of a member connected to external actuators, interferes with one or more apertures of inlet and outlet ducts emerging in a valve seat, resulting in an interruption of the fluid passing through said valve.

The material of the membrane must be an elastomeric material compatible with the controlled fluid and in the case where the fluid is high-pressure and high-temperature saturated or superheated steam, it is necessary to use as the membrane material a silicone elastomer resistant to high temperature. However, often this silicone elastomer, even though it is suitably resistant to the temperatures of the steam, may undergo variations in the presence of saturated steam on account of water in the liquid state which may penetrate into the membrane body, causing swelling and disintegration of the latter over the course of time, requiring periodic replacement thereof and, what is worse, releasing particles of elastomer into the environment of the said steam, the presence of which cannot be tolerated in certain applications, such as for example autoclaves for the sterilization of medicinal and food products. In order to overcome this serious drawback, it has been thought to line the face of the silicone-elastomer membrane exposed to the steam with a relatively thin layer of material resistant to high temperatures and inert with respect to the steam, such as for example polytetrafluoroethylene (PTFE). Unfortunately this solution has provided only a partial remedy because, owing to the fact that PTFE has physical properties very different from those of silicone elastomers and the silicone elastomer bulk of the membrane tends to creep underneath the thin layer of PTFE when subject to compressive forces, the latter may be unduly stressed, becoming separated from the said elastomer and also splitting and tearing on the surface, thus exposing the elastomer to the steam.

A first attempt at overcoming the abovementioned drawbacks, carried out by the same applicant of the present application, has been that of increasing the thickness of the silicone-elastomer membrane and providing at least one aperture leading into the valve seat with a rounded projecting rim having a fairly large radius so that the membrane of elastomer material is no longer exposed to stresses against sharp edges, this rounded projecting rim also being advantageously arranged exactly underneath the centre of the membrane where the latter is thicker on account of a projection ensuring engagement thereof with a thrust member connected to a valve actuator, so as to reduce the stresses on the said membrane and transfer them to where the latter is thicker. This attempt has not proved to be entirely successful, even though it has without doubt prolonged the life of the PTFE layer, although after a longer period of time, the said layer still becomes separated and breaks.

From the above it is therefore obvious that separation of the PTFE layer from the silicone elastomer bulk and breakage of its surface depends more or less exclusively on the major differences in physical properties, in particular elasticity, rigidity and creep, which exist between the silicone elastomers and PTFE and, consequently, in order to overcome this drawback the control member for a valve designed to control steam should be made entirely of PTFE.

So that this control member made entirely of PTFE is able to function properly, it is necessary for it to have at least one thicker zone which acts as a plug and a thinner zone which, by flexing, allows movements of the plug outside and in engagement with a rim or seat supporting said plug.

In particular the control member is in the form of a disc with a substantially cylindrical central thicker portion with bevelled rims connected to a thinner radial zone, which is able to flex easily in a substantially axial direction, in turn connected to a circular peripheral zone with a thickness greater than that of the radial zone designed to engage with fixed parts of a valve body.

More particularly, the cylindrical-shaped central thicker portion ends in an external surface shaped in the manner of a flattened dome which matches the shape of a bevelled rim present between an inlet duct and a shallow valve seat present in the body of the said valve.

In addition, in the said disc-shaped control member, precisely above the thicker portion which acts as a plug there is located another thicker portion designed to engage with a thrust member of means for actuating said valve.

Furthermore, the said control member is provided in its thicker peripheral portion with a circumferential cavity designed to accommodate an elastic member to be gripped between the control member and the valve body.

In particular, when the control member consists of a disc made of PTFE, it is obtained as one piece, by lathe working, from a cylindrical bar of PFTE.

Preferably, the body of the valve is divided into two parts, a lower base and an upper cover, the lower base having an inlet duct and an outlet duct for said valve and the shallow seat provided with a first step for accommodating the thicker peripheral zone of the disc-shaped control member and with two apertures communicating with the two inlet and outlet ducts and the upper cover being provided with an internal cavity for engaging, on the opposite side, with the thicker peripheral zone of said control member, where said internal cavity is extended by a through-hole for allowing the movement of said thrust member.

More preferably, the shallow seat of the base with its first step and the bevelled rim of the inlet aperture are lathe machined so as to obtain a smooth and careful finish.

The features and advantages of the present invention will emerge more clearly from the following detailed description of an embodiment thereof, which is not to be considered in any way limiting, provided with the enclosed drawings, in which:
Figure 1 is a side view in cross-section of a valve of the prior art with a control member which is able to act just as a stopping member;
Figure 2 is a plan view of a base with seats of the said valve of Figure 1;
Figures 3 and 4 are a view from below and a side view in cross-section, respectively, of a membrane used as a control member in the valve of Figure 1, showing damage caused to it by internal operation of the valve itself;
Figure 5 is a side view in cross-section of another valve of the prior art with a control member which has attempted to lessen the damage to the membrane which occurred in the valve according to Figure 1;
Figure 6 is a plan view of a base with seat of the valve according to Figure 5;
Figures 7 and 8 are a view from below and a side view in cross-section, respectively, of a membrane as a control member used in the valve according to Figure 6 showing the damage, albeit minor, caused to the said membrane by internal operation of the valve itself;
Figure 9 is a side view in cross-section of a valve with a control member according to the present invention in the closed state, consisting in particular of a semi-rigid diaphragm which eliminates the drawbacks of the prior art;
Figure 10 is a side view in cross-section of the said valve with the control member in the open state;
Figure 11 is a plan view of a base with seat of the said valve according to Figure 9;
Figures 12 and 13 are a plan view and a bottom view, respectively, of the diaphragm member used in the valve according to the present invention.

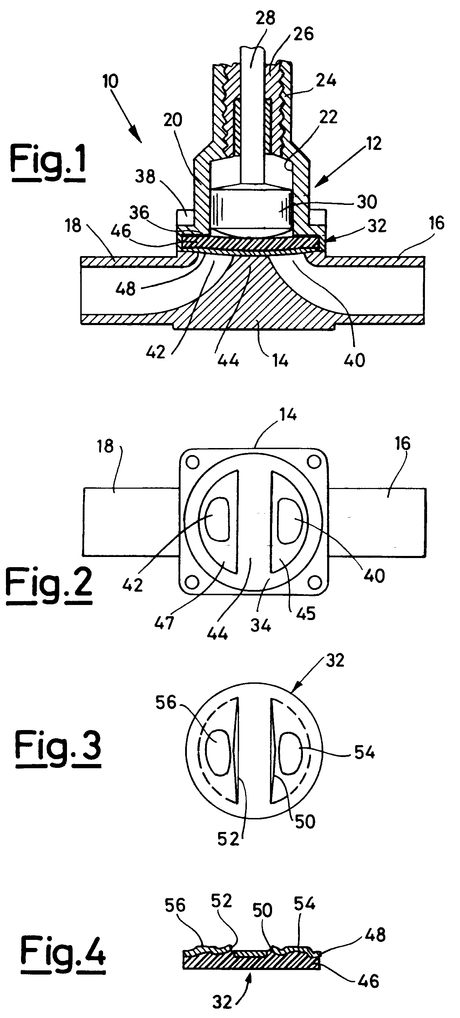

With reference to Figures 1 to 4, it can be seen that a valve of the prior art 10 comprises a body 12 formed by a base 14 provided with two tubular ducts 16 and 18, respectively an inlet duct and outlet duct, and a substantially cylindrical cover 20 defining a cylindrical cavity 22 and extended at the top in the form of a neck 24 provided with a screw-type stuffing box 26 through which there passes a cylindrical control shank 28 enabled to perform axial movements and engaging with a stopper 30, also cylindrical, designed to engage in a thrusting manner with a flexible-membrane diaphragm 32 which rests against an upper flat seat 34 of the base 14 facing a recess 36 formed in a flange 38 of the said cover 20 for accommodating said diaphragm 32. In the upper flat seat there emerge two apertures 40 and 42 of the respective tubular ducts 16 and 18 separated by a flat zone 44 which forms a seal with the lower surface of the diaphragm 32. The diaphragm 32 consists of an elastic disc 46 which, for example for the requirements imposed by steam, must be at least a silicone elastomer lined at the bottom, where it must come into direct contact with the steam, with a thin highly heat-resistant layer 48, such as for example polytetrafluoroethylene (PTFE).

Referring more in detail to Figures 1, 3 and 4, it can be noticed how the particular configuration of the valve 10 and particularly of the flat zone 44 and the apertures 40 and 42 may, with time, make to damage the flexible-membrane diaphragm 32.

In fact, when the valve is closed, as can be seen in Figure 1, the cylindrical stopper 30 pushes the diaphragm 32 against the aforementioned flat zone 44 and two crescent-shaped depressions 45 and 47 surrounding the two apertures 40 and 42. As a result of this thrusting action and the effect of the high temperature associated with steam, the elastomer of the disc 46 tends to yield and creep, becoming depressed in the region of the flat zone 44 and swelling up in the region of the crescent-shaped depressions 45 and 47 and the apertures 40 and 42. The thin layer 48 of PTFE follows, as best it can, the yielding movement of the disc 46, but on account of its relative rigidity, it tends to split along two lines 50 and 52 and, in some cases, swell up in the form of two humps 54 and 56 corresponding to the depressions 45 and 47 and the apertures 40 and 42, resulting in the deformation and breakage of the PTFE layer depicted in Figures 3 and 4 and hence all the aforementioned drawbacks which make this kind of valve unsuitable for use in heat sterilization autoclaves.

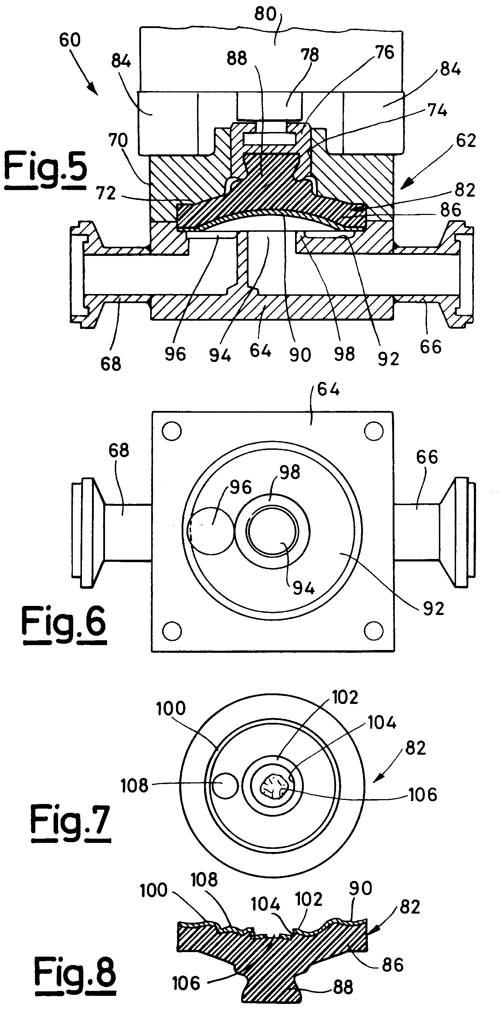

With reference now to Figures 5 to 8, it can be seen how, in accordance with a prior art developed by the present Applicant, a first attempt was made to reduce the drawbacks which affected the valves depicted in Figures 1 to 4.

If we now look at said figures, we can see that the valve of the prior art 60 comprises a body 62 formed by a square base 64 provided with two tubular ducts 66 and 68, respectively an inlet duct and outlet duct, and a cover 70, also square, provided with an internal recess 72 having internal concentric steps provided with a through-hole 74 designed to accommodate a thrusting device 76 connecting a cylindrical shank 78 of an actuator 80 to an elastic membrane diaphragm 82. The actuator 80 is fixed in turn to the cover 70 by means, for example, of a plurality of spacers 84 through which fixing screws (not shown) obviously pass. The elastic membrane diaphragm 82 is formed by an elastomeric disc-shaped body 86 having on top of it a projection 88 which can be fixed inside the thrusting device 76 and is lined at the bottom with a film-like layer 90 of material resistant to the temperatures typically associated with steam, for example polytetrafluorethylene (PTFE).

The base 64 has centrally a shallow circular seat 92 in which an aperture 94 communicating with the tubular inlet duct 66 and an aperture 96 communicating with the tubular outlet duct 68 emerge. The aperture 94 is surrounded by a rounded projecting rim 98 designed to engage with the film-like layer 90 so as to ensure the sealing closure of the valve when the membrane diaphragm 82 is lowered during closing.

Just to ensure a hermetic seal between the rounded rim 98 and the layer 90, the diaphragm 82 must be lowered until said rim 98 embeds itself substantially inside the bulk of said diaphragm 82 and for this reason the rim 98 is designed so as to be projecting. This embedding of the rim 98 in the bulk of the diaphragm 82 results, owing to the action of the pressure exerted and and the high temperature associated with the presence of steam, in creeping of the bulk of elastomers forming the disc 86 with consequent stressing of the film-like layer 90 of PTFE. This results in damage to the said PTFE layer, similar to that depicted in detail in Figures 7 and 8. Said damage consists essentially in lifting of an external circular ring 100 of the layer 90 of PTFE coinciding with the external rim of the shallow circular seat 92, in lifting of an internal circular ring 102 usually associated with a discontinuity 104 in the layer 90 of PTFE in the form of a circular split, coinciding with the projecting rounded rim 98, in tearing 106 of the said layer 90, essentially irregular in shape, in the centre of the diaphragm 82, and in lifting 108 of the said layer 90 coinciding with the aperture 96 of the outlet duct 68. It can be clearly understood that even this kind of valve of the prior art is affected, albeit to a lesser extent, by the same drawbacks as the valve depicted in Figures 1 to 4, causing in time the same problems which would make it unsuitable for use in sterilization autoclaves.

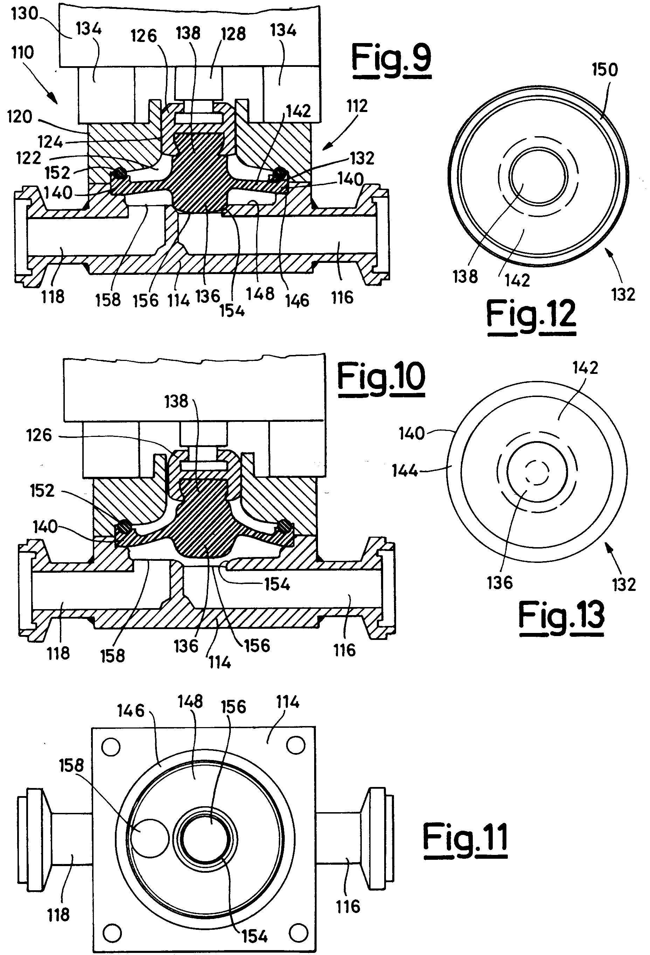

Let us now consider Figures 9 to 13 in order to understand the structure and operation of a valve containing the present invention.

If we examine the aforementioned figures, it can be seen that a valve 110 formed by a square base 114 provided with two tubular ducts 116 and 118, respectively an inlet duct and outlet duct, and a cover 120, also square, provided with an internal recess 122 tapering towards a through-hole 124 designed to accommodate a thrusting device 126, which is exactly the same as the thrusting device 76 depicted in Figure 5, connecting a cylindrical shank 128 of an actuator 130 to a mobile diaphragm member 132 made of semi-rigid material highly resistant to the temperatures which are typical of steam used for sterilization, such as for example the well-known PTFE. The actuator 130 is in turn fixed to the cover 120 by means of a plurality of spacers 134 through which fixing screws (not shown) obviously pass.

Let us now consider in detail the semi-rigid diaphragm 132 on which the present invention is essentially based. As can be seen in particular in Figures 9 and 10, the diaphragm 132 comprises a thicker central zone formed by a lower projection 136, which henceforth will be called "plug", and an upper projection 138 which can be fixed inside the thrusting device 126 so as to allow the latter to exert an action on the diaphragm 132. The thicker central zone is connected to a peripheral zone 140 of the diaphragm 132 by a thinner radial zone 142 which acts as an elastic flexing zone so as to allow mobility of the plug 136, while the said peripheral zone 140 is provided with a lower surface 144 designed to rest against and form a seal with a first step 146 of a shallow seat 148 formed in the base 114. The peripheral zone 140 is provided at the top with a circumferential recess 150 with a semi-circular cross-section designed to accommodate an elastic member 152 which may be a common O-ring seal which, however, in this case does not perform any sealing function but, as will be explained further below, merely helps ensure elastic gripping of the diaphragm between the base 114 and the cover 120.

The lower projection which forms the plug 136 has the shape of a cylinder with its end in the form of a flattened dome, the periphery of which, when the valve is closed, engages with and perfectly fits the bevelled rim 154 connecting the shallow seat 148 to the inlet aperture 156 which forms a link between the inlet duct 116 and the shallow seat 148. An outlet aperture 158 connects the shallow seat 148 to the outlet duct 118.

The presence of the elastic member 152 inside the circumferential recess 150 of the disc-shaped diaphragm 132 has the function of distributing uniformly gripping of the peripheral zone 140 of the diaphragm 132 between the first step 146 of the base 114 and the internal recess 122 of the cover 120, thereby overcoming any irregularity or lack of parallelism between the said members and ensuring a hermetically sealed engagement of the peripheral zone 142 against the first step 146 without the application of excessive gripping forces which may result in substantial deformation of the disc-shaped diaphragm 132 and hence adversely affect operation thereof.

It should be reminded that the disc-shaped diaphragm 132 which forms the mobile member of the valve 110 is made in one piece, for example by lathe working, so as to obtain all the detailed features which can be seen in Figures 9 to 13.

The operation of the valve according to the invention is as follows:
Since the disc-shaped diaphragm 132 is made so that the plug 136 normally rests against the bevelled rim 154, the valve 110 is therefore normally closed and remains so until the said plug 136 is raised. Engagement of the plug 136 against the bevelled rim 154 is sufficient to maintain the sealing action, provided that both the dome-shaped surface of the plug and the truncated-cone shaped surface of the bevelled rim 154 have been machined to form a suitable finish, this sealing action being maintained or even increasing with the slight wear which affects the said plug over the course of time, since said wear in fact improves the fit between the plug 136 and the bevelled rim 154.

Opening of the valve 110 occurs, as can be seen in Figure 10, by means of raising of the cylindrical shank 128 by the actuator 130 which displaces the thrusting device 126 engaged with the upper projection 138 of the disc-shaped diaphragm 132, causing an upward flexing movement of the radial zone 142 and separation of the dome-shaped peripheral surface of the plug 136 from the conical surface of the bevelled rim 154, thus allowing opening of the valve and communication between the inlet duct 116 and the outlet duct 118. Actually, the raising of the disc-shaped diaphragm 132 has been exaggerated somewhat in Figure 10, since this raising movement is in fact about half of that shown; however, this exaggeration illustrates more clearly the opening action of the valve.

The special shapes of the peripheral surface of the plug 136 and the bevelled rim 154 provide this valve with an additional advantage which was not possible in the case of the valves of the prior art depicted above. Since the peripheral surface of the plug and that of the bevelled rim are rigid and coincide substantially, a small raising movement of the disc-shaped diaphragm 132 keeps said surfaces parallel so that the valve has the advantageous feature of proportionality, i.e. is able to allow a flow proportional to the distance which is created between the bevelled rim 154 and the plug 136, something which was impossible in the prior art depicted herein because both the diaphragm 32 of the first example depicted and that 82 of the second example are flexible, being made of a silicone elastomer, so that they are also deformable and hence are not able to maintain, during opening, a fixed distance with respect to the apertures 40 and 42 of Figure 1 or the projecting rim 98 of Figure 5. It should be observed, moreover, that the sealing action in the two valves of the prior art is ensured by means of a substantial deformation of the flexible diaphragms 32 and 82. Consequently, it can be understood that these valves of the prior art are able to perform only the normal ON/OFF or stopping operation.

Obviously, in order to obtain the feature of proportionality, the valve must be provided with an actuator which permits this, such as a pneumatic motor with controllable travel for motor-driven valves or a precision micrometer screw for valves which can be operated manually, it thus being possible to calibrate the flow of the valve using techniques which have already been known for some time and which therefore cannot form part of the present invention.

The above description depicts an embodiment of the present invention provided just as a non-limiting example, such that variations and equivalent solutions may occur to those skilled in this particular art, all of which are to be regarded as covered herein. For example, the circumferential recess 150 could have a cross-section different from that depicted herein or the upper projection 138 could have a shape different from that depicted herein or be replaced by different means all performing the function of connecting the shank 128 of the actuator 130 to the disc-shaped diaphragm 132 without departing from the scope of the present invention. In the same way, the plug 136 could have sizes different from those indicated in Figures 9 and 10 (for example be much longer than that shown, so as to be suited for a thicker base 114), provided that the substantially conical lateral surface zone of the plug 136 still precisely fits the truncated-cone shaped surface of the bevelled rim 154. Moreover, if the high-temperature requirements associated with steam do not have to be satisfied, as in the case where, for example, the flow of fluids, such as liquids, with relatively low temperatures have to be controlled, it is not necessary to use PTFE as the material for the mobile control member 132, but less costly materials such as polyamide (nylon), polypropylene (PP) or some suitably hard set rubber elastomer may be used, the valve operating equally well for fluids with a relatively low temperature, provided that the mobile member 132 has the shape depicted in Figures 9 and 10 and that an elastic member, such as an O-ring 152, is always used between the circular recess 150 of the mobile member 132 and the valve cover 120.

## Claims

1. Control member for valves made entirely of hard and elastic plastic material, characterized in that it has at least one thicker zone (136) which acts as an plug and a thinner zone (142) which, by flexing, allows movements of the plug (136) outside of and in engagement with a rim (154) or seat supporting said plug (136).

2. Control member for valves, according to Claim 1, characterized in that the control member (132) is in the form of a disc with a substantially cylindrical central thicker portion (136) with bevelled rims connected to a thinner radial zone (142), which is able to flex easily in a substantially axial direction, in turn connected to a circular peripheral zone (140) with a thickness greater than that of the radial zone (142) designed to engage with fixed parts of a valve body (112).

3. Control member for valves, according to Claim 2, characterized
in that the cylindrical-shaped central thicker portion (136) terminates in an external surface shaped in the manner of a flattened dome which matches the shape of a bevelled rim (154) present between an inlet duct (116) and a shallow valve seat (148) present in the body (112) of the said valve.

4. Control member for valves, according to Claim 3, characterized in that another thicker portion (138) designed to engage with a thrust member (126) of actuating means (130) for the said valve is located in the said disc-shaped control member (132) exactly above the thicker portion (136) which acts as a plug.

5. Control member for valves, according to Claim 4, characterized in that the said control member (132) is provided in its thicker peripheral portion (140) with a circumferential recess (150) designed to accommodate an elastic member (152) to be gripped between the control member (132) and the valve body (112).

6. Control member for valves, according to the preceding claims, specially suited for steam valves, characterized in that said control member (132) consists of a disc of PTFE which is obtained as one piece, by lathe working, from a cylindrical bar of PTFE.

7. Control member for valves, according to Claims 1 to 5, characterized in that the body (112) of the valve is divided into two parts, a lower base (114) and an upper cover (120), the lower base having an inlet duct (116) and an outlet duct (118) for said valve and the shallow seat (148) provided with a first step (146) for accommodating the thicker peripheral zone (140) of the disc-shaped control member (132) and with two apertures (156, 158) communicating with the two inlet and outlet ducts (116 and 118) and the upper cover (120) being provided with an internal recess (122) for engaging, on the opposite side, with the thicker peripheral zone (140) of said control member, where said internal recess (122) is extended by a through-hole (124) for allowing the movement of said thrust member (126).

8. Control member for valves, according to Claim 7, characterized in that the shallow seat (148) of the base (114) with its first step (140) and the bevelled rim (154) of the inlet aperture (156) are lathe machined so as to obtain a smooth and careful finish.
